# EUROPEAN PATENT SPECIFICATION

(11) **EP 2 782 368 B1**
(45) Date of publication and mention of the grant of the patent: **06.11.2019**
(21) Application number: 12850338.0
(22) Date of filing: 20.09.2012
(51) Int. Cl.: H04W 4/12, H04L 12/58, H04M 1/725

(54) **METHOD AND SYSTEM FOR AUTOMATICALLY DELETING INSTANT MESSAGING INFORMATION**
VERFAHREN UND SYSTEM ZUM AUTOMATISCHEN LÖSCHEN VON SOFORTNACHRICHTENINFORMATIONEN
PROCÉDÉ ET SYSTÈME POUR LA SUPPRESSION AUTOMATIQUE DE DONNÉES DE MESSAGERIE INSTANTANÉE

(30) Priority: 18.11.2011 CN 201110367413
(43) Date of publication of application: 24.09.2014
(73) Proprietor: Tencent Technology (Shenzhen) Company Limited, Shenzhen, Guangdong 518044 (CN)
(72) Inventor: LIANG, Xing, Shenzhen City, Guangdong 518044 (CN); HUANG, Qing, Shenzhen City, Guangdong 518044 (CN); ZHANG, Bin, Shenzhen City, Guangdong 518044 (CN)
(74) Representative: Maiwald Patent- und Rechtsanwaltsgesellschaft mbH
(86) International application number: PCT/CN2012/081687
(87) International publication number: WO 2013/071791

(56) References cited:
- EP-A1- 1 406 428
- EP-A1- 2 362 592
- CN-A- 101 465 904
- CN-A- 101 867 660
- CN-A- 101 867 891
- CN-A- 102 487 490
- US-A1- 2009 003 552
- US-A1- 2011 078 273
- US-B1- 6 324 569

## Description

### Field of the Invention

The present invention relates to mobile communication, and particularly to a method and system for automatically deleting instant messaging (IM) information.

### Background of the Invention

In current mobile communication technology, information is transmitted among mobile communication devices through IM tools in a manner such as texts, pictures, voices or videos and so on. And it gets the favor of users, since only little traffic is consumed. However, after a transmitter sends the information, he looses the control of the information, and cannot delete the information. If the information is needed to be deleted, the information has to be deleted manually by a receiver. Otherwise, the information is saved in the mobile communication device of the receiver. In view of the above, when important information exists, the information or privacy will be leaked easily, if the receiver forgets to delete the information in time.

EP 2 362 592 A1 discloses that a system and method are provided for automatically deleting messages such as email upon consumption by the recipient. Consumption by the recipient may include viewing the message, forwarding or replaying to the message, or archiving, saving, copying, or moving the message. A indicator is inserted in the message, for example in the message header or body, indicating that the message is to be deleted upon detection of a triggering consumption action. Upon receipt at the recipient's mail client, the client determines whether the indicator is present, and, upon detection of a trigger consumption action, automatically closes any views of the message displayed by the recipient's mail client and deletes the message. Optionally a warning is provided to the recipient prior to deletion.

US 6,324,569 B1 discloses methods, articles, signals, and systems for providing email message originators and distributors with default control over message removal at a message recipient's location, regardless of whether the message has been opened. For instant, a self-removing message is designated as such by the message's originator, and a self-removal enhancement is added to conventional message content before the message is transmitted over a computer network toward one or more recipients.

US 2011/0078273 A1 provides a mobile communication terminal and a message automatic cleaning method thereof. The mobile communication terminal comprises a user interface unit, a man machine interface and a message module interface, a cleaning management unit, a timing trigger unit and a rule judgment unit. The message automatic cleaning method of the mobile communication terminal comprises the following steps: step a, setting message directory automatic cleaning frequencies and rules in a rule judgment unit; step b, setting a waiting period of a timing trigger unit; step c, judging whether current information accords with the cleaning rule when the set waiting period ends, and deleting the message if the information accords with the rule.

### Summary of the Invention

A method and system for automatically deleting IM information is provided in the present invention, so that an information receiving terminal can delete the information according to a command of a user of an information transmission terminal after the information receiving terminal receives and plays the information.

A technical solution in the present invention is implemented as follows:
A method for automatically deleting instant messaging information as disclosed in claim 1.

An instant communication system for automatically deleting instant messaging information as disclosed in claim 4.

An information receiving terminal is provided as disclosed in claim 6.

It can be seen that in the method and system for automatically deleting IM information provided in the present invention, the automatic deletion command set by the user of the transmitter is added to the information, so that the information can be deleted automatically after arriving at the information receiving terminal.

### Brief Description of Drawings

In order to describe the technical solution clearly, drawings are briefly introduced as follows. Obviously, the drawings described as follows are for some examples of the present invention. Under the premise of not paying the creative work, persons having ordinary skill in the art can achieve other drawings.
FIG. 1 is a flowchart illustrating a method for transmitting information in accordance with an example of the present invention;
FIG. 2 is a flowchart illustrating a method for receiving and deleting information in accordance with an example of the present invention;
FIG. 3 is a schematic diagram illustrating a structure of an IM system for automatically deleting information in accordance with an example of the present invention.

### Detailed Description of the Invention

In order to make the technical scheme and advantages of the present invention clearer, the present invention is described in further detail hereinafter with reference to accompanying drawings and examples.

A method for automatically deleting IM information is provided in an example of the present invention, which includes:
receiving, by an information transmission terminal, an automatic deletion command from a user of the information transmission terminal, carrying the command in information to be transmitted, transmitting the information;
receiving and playing or displaying, by an information receiving terminal, the information, determining whether the information carries the automatic deletion command, if carrying, deleting the information automatically.

In the method above, carrying, by the information transmission terminal, the command in information to be transmitted includes setting a value of a flag in the information.

Accordingly, determining, by the information receiving terminal, whether the information carries the automatic deletion command includes determining whether a value of the flag in the information is a preset value according to a communication protocol established between the information transmission terminal and the information receiving terminal, if yes, determining that the information carries the automatic deletion command.

In addition, after the information receiving terminal determines that the automatic deletion command is carried in the information, and before the information is deleted, the method may further includes: notifying a user of the information receiving terminal to choose whether he agrees to delete the information. Afterwards, the information receiving terminal deletes the information after a deletion agreement command is received from the user of the information receiving terminal.

The information receiving terminal can delete the information in several ways, such as deleting the information immediately after the information is played or displayed; or, deleting the information after a preset time interval after the information is played or displayed.

The information above may be information in various forms, such as voice information, text information, video information, image information and so on. The information transmission terminal and the information receiving terminal above may be a smart phone, a flat computer, a notebook computer etc. The information is transferred between the information transmission terminal and the information receiving terminal in accordance with the communication protocol configured by an IM tool. And the form of the information, the information transmission terminal and the information receiving terminal are not limited in the present invention.

An example is described as follows for detail introduction.

The procedure of the example is divided into two stages for the introduction. A first stage is a process that an information transmission terminal transmits information. A second stage is a process that an information receiving terminal receives the information and deletes the information automatically.

### The first stage:

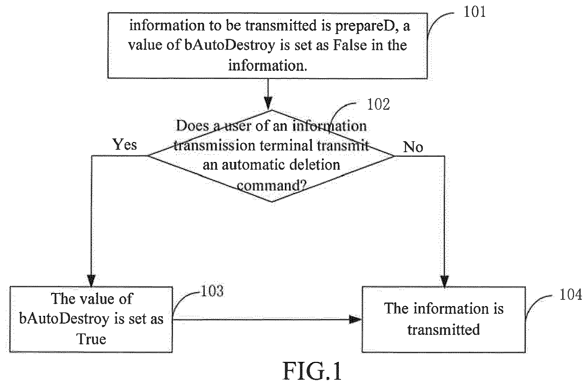

FIG. 1 is a flowchart illustrating a method for transmitting information. The method includes:
In step 101, the information transmission terminal prepares information to be transmitted. A value of flag bAutoDestroy is set in the information, where the value of bAutoDestroy is set as False.
In step 102, it is determined whether a user of the information transmission terminal transmits an automatic deletion command. If the command has already been transmitted, proceeds to step 103. Otherwise, the value of bAutoDestroy is still set as False, and then proceeds to step 104.
In step 103, the value of bAutoDestroy is set as True.
In step 104, the information is transmitted.

### The second stage:

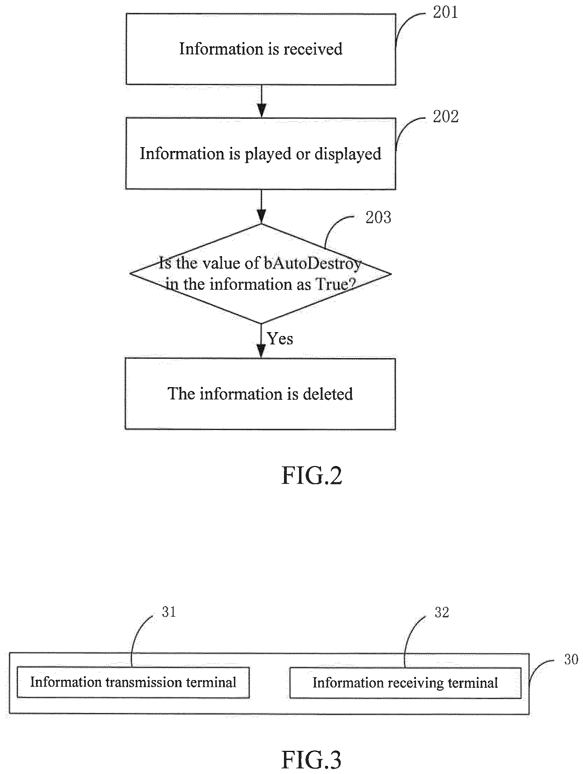

FIG. 2 is a flowchart illustrating a method for automatically receiving information and deleting information in accordance with an example of the present invention. The method includes:
In step 201, the information receiving terminal receives information.
In step 202, the information receiving terminal plays or displays the information.
In step 203, it is determined whether the value of the flag bAutoDestroy is True. If the value of bAutoDestroy is True, the information is deleted immediately after the information is played or displayed, or the information is deleted after a preset time interval after the information is played or displayed. If bAutoDestroy is False, the process ends.

In another example of the present invention, after the information receiving terminal determines that the value of bAutoDestroy is True, a user of the information receiving terminal is notified to choose whether he agrees to delete the information (there are various ways of notification, such as image, voice etc.). After a deletion agreement command from the user of the information receiving terminal is received, the information is deleted. If the deletion agreement command from the user of the information receiving terminal is not received, the information may be saved temporarily.

As shown in FIG. 3, a communication system 30 for automatically deleting information is provided in the present invention, which includes:
an information transmission terminal 31, to receive an automatic deletion command from a user of the information transmission terminal 31, carry the command in information to be transmitted, and transmit the information;
an information receiving terminal 32, to receive the information, play or display the information, determine whether the information carries the automatic deletion command, if the information carries the automatic deletion command, delete the information automatically.

When the information transmission terminal 31 carries the command in the information to be transmitted, the information transmission terminal 31 is to set a value of a flag in the information.

Accordingly, the information receiving terminal 32 determines whether the information carries the automatic deletion command by determining whether the value of the flag in the information is a preset value according to a communication protocol established between the information transmission terminal 31 and the information receiving terminal 32. And if the value of the flag in the information is a preset value, it is determined that the information carries the automatic deletion command.

The information receiving terminal 32 above is further to notify the user of information receiving terminal 32 to choose whether he agrees to delete the information after determining that the information carries the automatic deletion command, delete the information after a deletion agreement command from the user of the information receiving terminal 32 is received.

In the system above, when the information receiving terminal 32 deletes the information automatically, the information receiving terminal 32 is to delete the information immediately after the information is played or displayed, or delete the information after a preset time interval after the information is played or displayed.

The information above may be one of text information, voice information, video information and image information.

It can be seen from the above that a method and system for automatically deleting instant messaging information is provided in the present invention. The information can be deleted automatically after the information arrives at an information receiving terminal by adding an automatic deletion command configured by a user of an information transmission terminal to the information. Furthermore, before the information is deleted, agreement of a user of the information receiving terminal may be obtained firstly.

The foregoing is only preferred examples of the present invention, and the protection scope of the present invention is not limited to these examples. Any improvement and replacement which can be made in the technical scope disclosed by the present invention by those skilled in the art should be covered in the protection scope of the invention. And thus, the protection scope of the present invention should be defined by the claims.

### Industrial Applicability

A method and system for automatically deleting instant messaging information is provided in the present invention. The information can be deleted automatically after the information arrives at an information receiving terminal by adding an automatic deletion command configured by a user of an information transmission terminal to the information. Furthermore, before the information is deleted, agreement of a user of the information receiving terminal may be obtained firstly.

## Claims

1. A method for automatically deleting instant messaging information, comprising:
setting, by an information transmission terminal (31), a value of a flag as False in instant messaging information to be transmitted;
when receiving an automatic deletion command from a user of the information transmission terminal, modifying, by the information transmission terminal, the value of the flag as a preset value in the instant messaging information to be transmitted;
transmitting, by the information transmission terminal, the instant messaging information; and
receiving (201), by an information receiving terminal (32), the instant messaging information;
playing or displaying (202), by the information receiving terminal, the instant messaging information;
determining, by the information receiving terminal, whether the value of the flag in the instant messaging information is the preset value according to a communication protocol established between the information transmission terminal and the information receiving terminal, if yes, determining that the automatic deletion command is comprised in the instant messaging information, and deleting the instant messaging information automatically after a preset time interval after the instant messaging information is played or displayed.

2. The method according to claim 1, further comprising:
after the information transmission terminal determines the instant messaging information carries the automatic deletion command, and before the instant messaging information is deleted, notifying a user of the information receiving terminal to choose whether he agrees to delete the instant messaging information.

3. The method according to claim 2, wherein deleting the instant messaging information automatically comprises:
deleting the instant messaging information after an deletion agreement command is received from the user of the information transmission terminal.

4. An instant communication system for automatically deleting instant messaging information, comprising:
an information transmission terminal (31), to set a value of a flag as False in instant messaging information to be transmitted, when receiving an automatic deletion command from a user of the information transmission terminal, to modify the value of the flag as a preset value in the instant messaging information to be transmitted, and to transmit the instant messaging information;
an information receiving terminal (32), to receive the instant messaging information, to play or display the instant messaging information, to determine whether the value of the flag in the instant messaging information is the preset value according to a communication protocol established between the information transmission terminal and the information receiving terminal, if yes, to determine that the automatic deletion command is comprised in the instant messaging information, and to delete the instant messaging information automatically after a preset time interval after the instant messaging information is played or displayed.

5. The system according to claim 4, wherein the information receiving terminal (32) is further to notify a user of the information receiving terminal to choose whether he agrees to delete the instant messaging information after the information receiving terminal determines the instant messaging information carries the automatic deletion command, and delete the instant messaging information after a deletion agreement command is received from the user of the information receiving terminal.

6. An information receiving terminal (32) configured to implement the following steps of the method of claim 1, comprising:
receiving, by the information receiving terminal, instant messaging information;
playing or displaying (202), by the information receiving terminal, the instant messaging information;
determining, by the information receiving terminal, whether the value of the flag in the instant messaging information is the preset value according to a communication protocol established between the information transmission terminal and the information receiving terminal, if yes, determining that the automatic deletion command is comprised in the instant messaging information, and deleting the instant messaging information automatically after a preset time interval after the instant messaging information is played or displayed.

## Patentansprüche

1. Verfahren zum automatischen Löschen von Instant Messaging-Informationen, umfassend:
Festlegen eines Wertes eines Flags als Falsch in den zu übertragenden Instant-Messaging-Informationen durch ein Informationsübertragungsendgerät (31);
beim Empfangen eines automatischen Löschbefehls von einem Benutzer des Informationsübertragungsendgerätes, das durch das Informationsübertragungsendgerät den Wert des Flags als Vorgabewert in den zu übertragenden Instant Messaging-Informationen ändert;
Übertragen der Instant-Messaging-Informationen durch das Informationsübertragungsendgerät; und
Empfangen (201) der Instant-Messaging-Informationen durch ein Informationsempfangsendgerät (32);
Abspielen oder Anzeigen (202) der Instant-Messaging-Informationen durch das Informationsempfangsendgerät;
Bestimmen, durch das Informationsempfangsendgerät, ob der Wert des Flags in den Instant-Messaging-Informationen der Vorgabewert gemäß einem zwischen dem Informationsübertragungsendgerät und dem Informationsempfangsendgerät festgelegten Kommunikationsprotokoll ist, wenn ja, Bestimmen, dass der automatische Löschbefehl in den Instant-Messaging-Informationen enthalten ist, und automatisches Löschen der Instant-Messaging-Informationen nach einem vorgegebenen Zeitintervall, nachdem die Instant-Messaging-Informationen wiedergegeben oder angezeigt wurden.

2. Verfahren nach Anspruch 1, ferner umfassend:
nachdem das Informationsübertragungsendgerät bestimmt hat, dass die Instant Messaging-Informationen den Befehl zum automatischen Löschen enthalten, und bevor die Instant Messaging-Informationen gelöscht werden, Benachrichtigen eines Benutzers über das Informationsempfangsendgerät, um zu wählen, ob er bereit ist, die Instant Messaging-Informationen zu löschen.

3. Verfahren nach Anspruch 2, wobei das Löschen der Instant-Messaging-Informationen automatisch umfasst:
Löschen der Instant Messaging-Informationen, nachdem vom Benutzer des Informationsübertragungsendgerätes ein Löschzustimmungsbefehl empfangen wurde.

4. Sofortkommunikationssystem zum automatischen Löschen von Instant-Messaging-Informationen, umfassend:
ein Informationsübertragungsendgerät (31), um einen Wert eines Flags als Falsch in zu übertragenden Instant-Messaging-Informationen zu setzen, wenn es einen automatischen Löschbefehl von einem Benutzer des Informationsübertragungsendgerätes empfängt, um den Wert des Flags als Vorgabewert in den zu übertragenden Instant-Messaging-Informationen zu ändern, und um die Instant-Messaging-Informationen zu übertragen;
ein Informationsempfangsendgerät (32), um die Instant-Messaging-Informationen zu empfangen, die Instant-Messaging-Informationen abzuspielen oder anzuzeigen, um zu bestimmen, ob der Wert des Flags in den Instant-Messaging-Informationen der Vorgabewert gemäß einem zwischen dem Informationsübertragungsendgerät und dem Informationsempfangsendgerät festgelegten Kommunikationsprotokoll ist, wenn ja, um zu bestimmen, dass der automatische Löschbefehl in den Instant-Messing-Informationen enthalten ist, und um die Instant-Messaging-Informationen nach einem vorgegebenen Zeitintervall automatisch zu löschen, nachdem die Instant-Messing-Informationen abgespielt oder angezeigt wurden.

5. System nach Anspruch 4, wobei das Informationsempfangsendgerät (32) ferner einen Benutzer über das Informationsempfangsendgerät benachrichtigt, um zu entscheiden, ob er bereit ist, die Instant Messaging-Informationen zu löschen, nachdem das Informationsempfangsendgerät bestimmt hat, dass die Instant Messaging-Informationen den automatischen Löschbefehl enthalten, und die Instant Messaging-Informationen löscht, nachdem ein Löschzustimmungsbefehl vom Benutzer des Informationsempfangsendgerätes empfangen wurde.

6. Informationsempfangsendgerät (32), das eingerichtet ist, um die folgenden Schritte des Verfahrens nach Anspruch 1 durchzuführen, umfassend: Empfangen von Instant-Messaging-Informationen durch das Informationsempfangsendgerät; Abspielen oder Anzeigen (202) der Instant-Messaging-Informationen durch das Informationsempfangsendgerät; Bestimmen durch das Informationsempfangsendgerät, ob der Wert des Flags in den Instant-Messaging-Informationen der Vorgabewert gemäß einem zwischen dem Informationsübertragungsendgerät und dem Informationsempfangsendgerät festgelegten Kommunikationsprotokoll ist, wenn ja, Bestimmen, dass der automatische Löschbefehl in den Instant-Messing-Informationen enthalten ist, und automatisches Löschen der Instant-Messaging-Informationen nach einem vorgegebenen Zeitintervall nach dem Abspielen oder Anzeigen der Instant-Messing-Informationen.

## Revendications

1. Un procédé pour supprimer automatiquement des informations de messagerie instantanée, comprenant :
le fait de définir, par un terminal (31) de transmission d'informations, une valeur d'un indicateur comme Fausse dans les informations de messagerie instantanée à transmettre ;
lors de la réception d'une commande de suppression automatique en provenance d'un utilisateur du terminal de transmission d'informations, le fait de modifier, par le terminal de transmission d'informations, la valeur de l'indicateur en une valeur prédéfinie dans les informations de messagerie instantanée à transmettre ;
le fait de transmettre, par le terminal de transmission d'informations, les informations de messagerie instantanée ; et
le fait (201) de recevoir, par un terminal (32) de réception d'informations, les informations de messagerie instantanée ;
le fait (202) de lire ou d'afficher, par le terminal de réception d'informations, les informations de messagerie instantanée ;
le fait de déterminer, par le terminal de réception d'informations, si la valeur de l'indicateur dans les informations de messagerie instantanée est la valeur prédéfinie selon un protocole de communication établi entre le terminal de transmission d'informations et le terminal de réception d'informations ; dans l'affirmative, déterminer que la commande de suppression automatique est comprise dans les informations de messagerie instantanée, et supprimer les informations de messagerie instantanée automatiquement après un intervalle de temps prédéfini après que les informations de messagerie instantanée aient été lues ou affichées.

2. Le procédé selon la revendication 1, comprenant en outre :
après que le terminal de transmission de l'information détermine que les informations de messagerie instantanée transportent la commande de suppression automatique, et avant que les informations de messagerie instantanée ne soient supprimées, le fait d'informer un utilisateur du terminal de réception d'informations afin qu'il puisse choisir s'il accepte de supprimer les informations de messagerie instantanée.

3. Le procédé selon la revendication 2, dans lequel le fait de supprimer les informations de messagerie instantanée automatiquement comprend :
le fait de supprimer les informations de messagerie instantanée après la réception d'une commande d'accord de suppression de la part de l'utilisateur du terminal de transmission d'informations.

4. Un système de communication instantanée pour supprimer automatiquement des informations de messagerie instantanée, comprenant :
un terminal (31) de transmission d'informations, pour définir une valeur d'un indicateur comme Fausse dans des informations de messagerie instantanée à transmettre, lors de la réception d'une commande de suppression automatique en provenance d'un utilisateur du terminal de transmission d'informations, pour modifier la valeur de l'indicateur en une valeur prédéfinie dans les informations de messagerie instantanée à transmettre, et pour transmettre les informations de messagerie instantanée ;
un terminal (32) de réception d'informations, pour recevoir les informations de messagerie instantanée, pour lire ou afficher les informations de messagerie instantanée, pour déterminer si la valeur de l'indicateur dans les informations de messagerie instantanée est la valeur prédéfinie selon un protocole de communication établi entre le terminal de transmission d'informations et le terminal de réception d'informations, dans l'affirmative, pour déterminer que la commande de suppression automatique fait partie des informations de messagerie instantanée, et pour supprimer automatiquement les informations de messagerie instantanée après un intervalle de temps prédéfini après que les informations de messagerie instantanée aient été lues affichées.

5. Le système selon la revendication 4, dans lequel le terminal (32) de réception d'informations est en outre adapté pour avertir un utilisateur du terminal de réception d'informations afin qu'il choisisse s'il accepte de supprimer les informations de messagerie instantanée après que le terminal de réception d'informations détermine que les informations de messagerie instantanée transportent la commande de suppression automatique, et pour supprimer les informations de messagerie instantanée après qu'une commande de suppression d'accord soit reçue de l'utilisateur du terminal de réception d'informations.

6. Un terminal (32) de réception d'informations configuré pour mettre en œuvre les étapes suivantes du procédé selon la revendication 1, comprenant :
le fait de recevoir, par le terminal de réception d'informations, des informations de messagerie instantanée ;
le fait (202) de lire ou d'afficher, par le terminal de réception d'informations, les informations de messagerie instantanée ;
le fait de déterminer, par le terminal de réception d'informations, si la valeur de l'indicateur dans les informations de messagerie instantanée est la valeur prédéfinie selon un protocole de communication établi entre le terminal de transmission d'informations et le terminal de réception d'informations, dans l'affirmative, le fait de déterminer que la commande de suppression automatique est comprise dans les informations de messagerie instantanée, et le fait de supprimer les informations de messagerie instantanée automatiquement après un intervalle de temps prédéfini après que les informations de messagerie instantanée aient été lues ou affichées.
